# EUROPEAN PATENT SPECIFICATION

(11) **EP 3 063 906 B1**
(45) Date of publication and mention of the grant of the patent: **20.03.2019**
(21) Application number: 14859199.3
(22) Date of filing: 28.10.2014
(51) Int. Cl.: H04L 12/64

(54) **PACKET FORWARDING CONTROL**
PAKETWEITERLEITUNGSSTEUERUNG
COMMANDE DE RÉACHEMINEMENT DE PAQUETS

(30) Priority: 30.10.2013 CN 201310528372
(43) Date of publication of application: 07.09.2016
(73) Proprietor: Hewlett Packard Enterprise Development LP, Houston, TX 77070 (US)
(72) Inventor: WANG, Minghui, Beijing 100085 (CN)
(74) Representative: Haseltine Lake LLP
(86) International application number: PCT/CN2014/089729
(87) International publication number: WO 2015/062487

(56) References cited:
- CN-A- 101 605 102
- CN-A- 102 946 356
- CN-A- 103 166 874
- CN-A- 103 166 874
- CN-A- 103 220 218
- CN-A- 103 220 218
- US-A1- 2004 174 828
- US-A1- 2008 050 117
- US-A1- 2008 095 047
- US-A1- 2013 258 840

## Description

### BACKGROUND

Virtualized technology has been widely adopted in scenarios such as data center. It is known that server technology usually virtualizes one server to a plurality of virtual machines. In contrast, network virtualized technology usually virtualizes a plurality of network devices as one network device so as to simplify network infrastructure, and also enhance the scalability of network nodes and protect users investment at the same time. Currently, one approach is to serially connect the network devices or to form a ring topology. One master device is selected by an internal selection mechanism or a static configuration so as to control the operations of the virtual system. Such an approach is referred to as a horizontal virtualized technology. Another approach is to connect a plurality of port extender (PE) devices by a core backbone (CB) for controlling the operations of the virtual system. The PEs operate as remote interface boards for providing more ports.

Prior art technology is known from documents CN103220218 (Hangzhou H3C Tech Co; Pub. 24.07.2013) and US2013/258840 (Holness Marc et al; Pub. 03.10.2013).

### BRIEF DESCRIPTION OF THE DRAWINGS

FIG. 1 is a schematic view of an example the virtual system.
FIG. 2 is a schematic view of an example CB within the virtual system.
FIGS. 3A and 3B show an example flowchart of the packet forwarding control.
FIG. 4 is a schematic view of an example cascade Ethernet Packet.
FIG. 5 is an example dropped packet within ring topology.
FIG. 6 is another example dropped packet within ring topology.
FIG. 7 is an example showing the blocked massages from different PE devices at different locations.

### DETAILED DESCRIPTION

The invention made is described in the attached set of independent claims. Further technical features are described in the attached set of dependent claims.

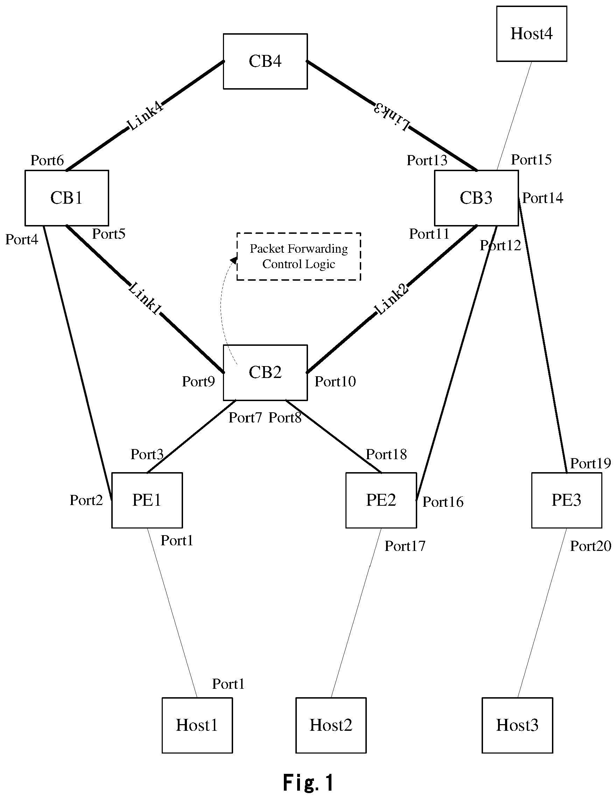

Horizontally virtualized technology may be adopted together with vertically virtualized technology so as to provide better extension via two-stage virtualization. That is, more physical network devices may be virtualized to be one logical network device, which is also referred to as "virtual system" or "stacked system." Referring to FIG. 1, a plurality of CB devices (CB1-CB4) may be formed as one-stage virtual system via horizontally virtualized system. Afterward, each CB devices and corresponding PEs, i.e., PE1 through PE3, are connected via vertically virtualized technology to form two-stage virtual system. It can be understood that FIG. 1 only shows an example virtual system with a few PEs and a few CBs, and links between the CBs are referred to as horizontally stacked links. In addition, the ports of the CBs connecting with horizontally cascaded links are referred to as horizontally cascaded ports. The links between the CB devices and the PE devices are referred to as vertical cascaded links. The ports of the CBs connecting with the vertically cascaded ports are referred to as downlink cascaded ports (DCPorts). The ports of the PEs connecting with the vertically cascaded ports are referred to as uplink cascaded ports (UCports). DCPort and UCPort are referred to as vertically cascaded ports. As shown in FIG. 1, Port1, Port15, Port17, and Port20 are access ports connecting to hosts or other network devices, and other ports are internal cascaded ports, including the horizontally cascaded ports between the CBs and the vertically cascaded ports between the CBs and the PEs.

Logically, the PE device may be a remote interface of the CB device for extending the number of the access ports, i.e., Port1. The packets arrive at the PE device via the access port, and then enter the CB device. Afterward, the packets are forwarded by the CB device via lookup table. In this regard, the packets are forwarded by the CB devices within the virtual system.

There are two kinds of packets needed to be forwarded, including known unicast packet and receiver-uncertain packet. The destination of the known unicast packet relates to a unicast address and a corresponding entry may be found within the lookup table of the CB device. In other words, the CB device clearly knows the destination of the unicast packet, and thus the CB device may forward the packet via a unique egress.

On the other hand, the destination of the receiver-uncertain packet may be a multicast address or a broadcast address. In addition, one packet may be deemed as receiver-uncertain packet when there is no corresponding entry can be found in the lookup table even though the destination of the packet relates to the unicast address. For such receiver-uncertain packet, the CB device may have to duplicate the packets and then to distribute the packets via different egress.

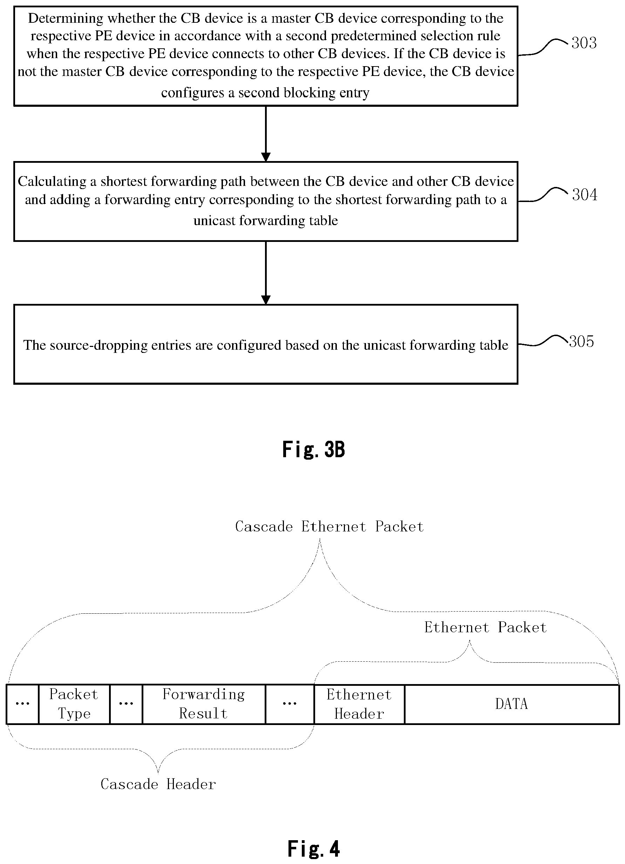

Referring to FIG. 1, one Ethernet unicast packet sent from Host1 enters Port1 of the PE1. Although PE1 connects to CB1 and CB2, PE1 may send the packet to CB1 or CB2 in accordance with the Hash algorithm implemented within the PE1. Generally, the packet may not be sent to both CB1 and CB2 from PE1 at the same time. If PE1 sends the packet to CB1 via Port2, PE1 may add a cascade header in front of the packet to form a cascaded Ethernet Packet as shown in FIG. 4. After the packet arrives at the CB1, CB1 determines to forward the packet via table lookup upon determining that a forwarding result of the cascade header of the packet is null. CB1 looks up a locally saved forwarding table to determine the forwarding result. If CB1 determines that the egress of the packet is Port20 of PE3, CB1 updates the cascade header by adding the forwarding result to the cascade header, and then PE1 sends the packet to CB2 via Port5.

After the packet arrives at CB2 via Port5, CB2 determines that the forwarding result of the cascade header of the packet is not null and obtains the egress of the packet is Port20 of PE3. As the forwarding result is not null, CB2 has not to look up the forwarding table. CB2 determines that the packet has to be forwarded to CB3 via Port10 in accordance with the egress, i.e., Port20. When the packet arrives at CB3 via Port11, CB3 executes the same process with CB2. That is, CB3 determines that the packet may be sent to PE3 via Port14 in accordance with the egress, i.e., Port20. After receiving the packet, PE3 determines the egress of the packet is Port20 according to the forwarding result of the cascade header. As Port20 is a local port of PE3, PE3 removes the cascade header of the packet and then sends the packet to Host3 via Port20.

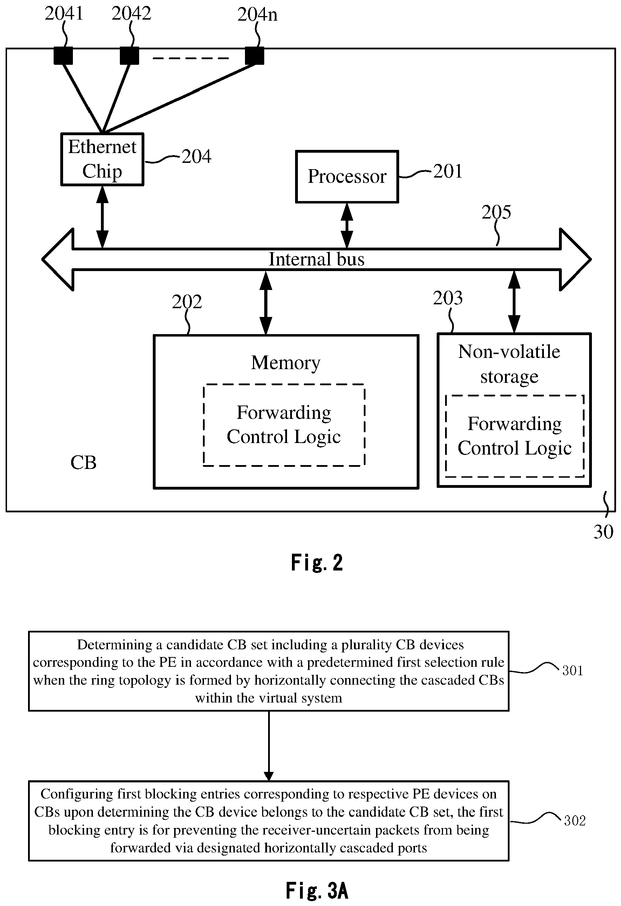

The above process relates to how one known unicast packet is forwarded. Different process may be adopted when the destination is not only one. In an example, a broadcast packet from Host1 may be sent from PE1 to CB1. As CB1-CB4 form a ring topology, the broadcast packet may be looped unlimited, which cause the so-called loop issue. Referring to FIG. 2, a forwarding control logic implemented within the CB may prevent the loop issue from being occurred. The CB device 20 includes a processor 201, a memory 202, a non-volatile memory (NVRAM) 30, a plurality of Ethernet chips 204, a plurality of ports (2041, 2042, ..., 204n) managed by the Ethernet chips, and an internal bus 205. Referring to FIG. 3, the processor 201 may fetch the machine readable instructions corresponding to the forwarding control logic to execute the process below.

At block 301, the ring topology is formed by horizontally connecting the cascaded CBs within the virtual system. A candidate CB set including a plurality CB devices corresponding to the PE is determined in accordance with predetermined first selection rule.

At block 302, first blocking entries corresponding to respective PE devices are configured on CBs upon determining the CB device belongs to the candidate CB set. The first blocking entry is for preventing the receiver-uncertain packets from being forwarded via designated horizontally cascaded ports.

During the building process of the virtual system, the CB device may obtain the topology by discovery mechanisms. That is to say, each CB device, i.e., from CB1 to CB4, may be aware of the same topology, as shown in FIG. 1, after the topology is stable. If the ring topology is not formed among CB1 to CB4, instead, a tree topology is formed, the loop issue is avoided. Otherwise, the above process, including block 301 and 302, may be adopted.

An example of first selection rule will be described hereinafter. A value M is calculated by inputting the identifier (ID) of the PE device to a predetermined algorithm, such as a random algorithm. As the IDs of the PE devices are unique and different from each other, it can be understand that the corresponding M is also different. S=M%N, wherein N represents a total number of the CB devices within the system. The corresponding CB device is determined by S, and then the CB device is added to the candidate CB set. As stated above, the corresponding M for different PE device are different, and thus S may be discrete. For instance, in FIG. 1, S may be three different digits, such as 1, 2 and 3, which respectively corresponds to three different CB devices, such as CB1, CB2, and CB3.

With respect to PE1, in an example, the candidate CB set includes CB2, and CB1 and CB3 are not in the candidate CB set. Under the circumstance, CB2 may locally configure the first blocking entries as being in the candidate CB set, and CB1 and CB3 may exit the process. In an example, the first blocking entries may be access control list (ACL) entries. The target of the first blocking entries is the receiver-uncertain packets. The packets are blocked at horizontally cascaded ports on the CB2. In an example, CB device may select a horizontally cascaded port along a first direction or along a second direction as the designated cascaded port, and then the ACL entries are distributed to the designated cascaded ports. For instance, Port10 is the first horizontally cascaded port along the first direction, and Port9 is the second horizontally cascaded port along the second direction. In an example, the load-sharing performance may be better if the direction of the selected horizontally cascaded port remains the same.

The first blocking entries distributed from CB2 to Port10 are in fact distributed to the Ethernet chips within Port10. In an example, the first blocking entries may include an ingress blocking entry, i.e., ingress ACL and an egress blocking entry, i.e., an egress ACL. Referring to Table 1, it can be seen that the matching rule and the corresponding action of the ingress ACL (No.1) and of the egress ACL (No. 2) are substantially the same. The only difference resides in that the ingress ACL is distributed to the ingress of the Ethernet chip where the packet arrives at the chip via Port10 and the egress ACL is distributed to the egress of the Ethernet chip where the packet exits the chip via Port10.

**Table. 1**

| No. | Direction | Matching rule 1 | Matching rule 2 | Action |
|---|---|---|---|---|
| 1 | Ingress | Multicast, broadcast or unknown unicast | Source device: PE1 | Drop |
| 2 | Egress | Multicast, broadcast or unknown unicast | Source device: PE1 | Drop |
| ...... | ...... | ...... | ...... | ...... |

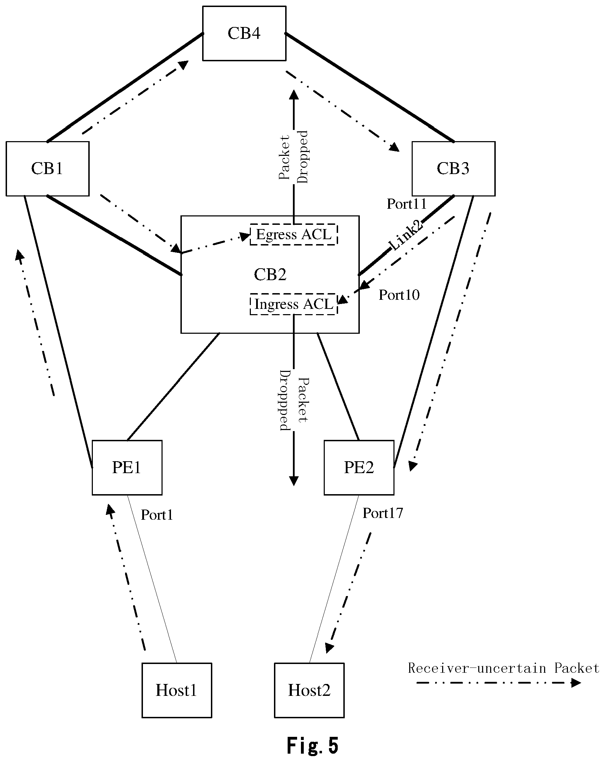

Referring to FIG. 5, it can be seen that the packet without definite destination sent from PE1 may be distributed toward several directions within the virtual system. When the packet arrives at CB2 via Port10, it can be understood that the packet has been forwarded by CB3 or other CB device. The cascade header of the packet carries the type of the packet, including unicast, multicast, broadcast, and unknown unicast. When the type of the packet relates to unicast, multicast, or broadcast, the packet matches "Matching rule 1." As the ID of the source device is also carried by the cascade header, "Matching rule 2" is also matched. That is, the packet matches the ingress ACL entry and is dropped. It is to be noted that the ID of the source device may be the ID of PE1 or the chip ID of PE1. When the packet arrives at CB2 via other ports and intends to exit CB2 via Port10, similarly, the packet may be dropped for the reason that the packet matches the egress ACL entry. In another aspect, for the receiver-uncertain packets from PE1, Port10 is blocked or malfunctioned for both the ingress and the egress. Thus, the receiver-uncertain packets sent from PE1 would not cause loop issue within the ring topology.

In the above-mentioned example, the ingress ACL entry and the egress ACL entry are configured on one CB device, which results in a simple configuration. However, such configuration has to be supported by chip capability. It can be understood that some chips may be configured with complex, or more rule for the ingress direction, but only may be configured with simple, and a few ACL entries. In an example, the candidate CB devices may include two adjacent CB devices. Similarly, a first candidate CB device is selected to be the first candidate CB set, for instance, CB2. Afterward, the CB device arranged at opposite end of the designated horizontally cascaded port, i.e., Port 10, of CB2 is selected to be the second candidate CB set, that is, CB3 in this example. At this moment, the CB set may include CB2 and CB3.

As CB 1 through CB4 are capable of executing the forwarding logic, at block 301, it is determined that CB1 and CB4 are not in the CB set corresponding to PE1 and CB2 and CB3 are respectively the first candidate CB device and the second candidate CB device. In the example, the designated horizontally cascaded port of the first candidate device is the horizontally cascaded port along the first direction. The designated horizontally cascaded port of the second candidate device is the horizontally cascaded port along the second direction. The designated horizontally cascaded ports of the first candidate device and of the second candidate device are connected via horizontal cascaded links. The blocking entry relates to an ingress blocking entry for blocking the receiver-uncertain packets sent from the PE device to enter the CB device via the designated cascaded port.

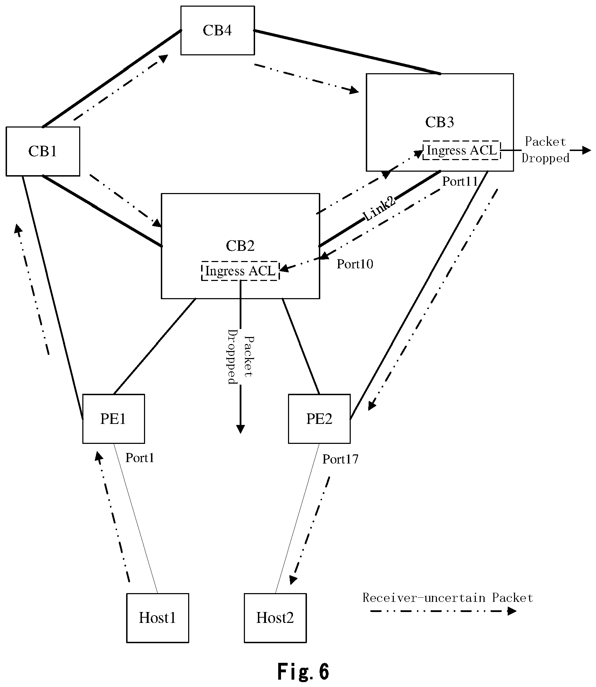

The process of configuring the blocking entries within CB2 will be described hereinafter. The ingress ACL entries, as shown in Table. 1, are distributed to the designated cascaded port, i.e., Port10. CB3 distributes the ingress ACL entries, as shown in Table. 1, to the horizontally cascaded port, i.e., Port11, which is opposite to Port10. As shown in FIG. 6, the packet without definite destination from PE1 may pass Port10 along the first direction, but may be dropped when entering Port11 for the reason that the packet matches the ingress ACL entry. The packet may pass Port11 and arrive at Port10 via Link2 along the second direction, but may be dropped when entering Port10 for the reason that the packet matches the ingress ACL entry. In the example, the packet without definite destination from PE1 would not cause the loop issue within the ring topology due to the cooperation of CB2 and CB3.

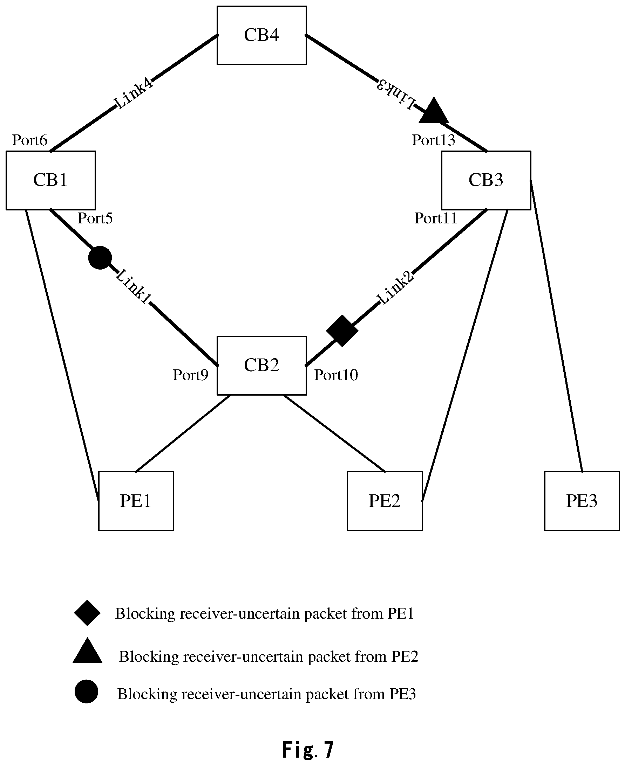

In view of the above, the packet without definite destination from PE devices is prevented from causing loop issue. As stated above, the load-sharing performance may be better if the direction of the selected horizontally cascaded port remains the same. For instance, CB2 may select Port10 to be the horizontally cascaded port along the first direction for PE1. CB3 may select Port 13 to be the horizontally cascaded port along the first direction for PE2. The process is then been executed in a similar manner. In the end, the links for blocking the receiver-uncertain packets from each PE are distributed among the ring topology, which prevents one single link from frequently blocking the receiver-uncertain packets so as to enhance the load-balance performance. In the second example, as the first candidate CB device and the second candidate CB device are adjacent to each other, the load-balance performance may also be enhanced basing on the same methodology. Referring to FIG. 7, it can be seen that the receiver-uncertain packets sent from different PE are blocked at different links.

Also referring to FIG. 1 and Fig.3B, in another example, the forwarding control logic executed by the processor 201 may further include block 303. At block 303, when the respective PE device connects to other CB devices, a second predetermined selection rule determines whether the CB device is a master CB device corresponding to the respective PE device. If the CB device is not the master CB device corresponding to the respective PE device, the CB device configures a second blocking entry corresponding to the respective PE device for preventing the downlink cascaded port of the PE device from receiving the receiver-uncertain packets.

When one PE device connects to a plurality of CB devices, at block 303, only one CB device is allowed to send the packet without definite destination to the PE device. As such, the PE device is prevented from receiving the same receiver-uncertain packets. Referring to FIG. 1, PE1 respectively connects to vertically cascaded links to CB1 and CB1. With respect to one broadcast packet, CB1 and CB2 may send the broadcast packet to PE1, which results in that the PE1 receives the same packets. As the forwarding control logic and the second selection rule executed by CB1 and CB2 are the same, and thus the master CB device corresponding to PE1 is the same. In an example, the second selection rule may be the same with the first selection rule. It can be seen from Table. 2 that different S may correspond to different CB device.

**Table. 2**

| S | 1^{st} selection rule | 2^{nd} selection rule |
|---|---|---|
| 1 | CB1 | CB1 |
| 2 | CB2 | CB2 |
| 3 | CB3 | CB1 |
| 4 | CB4 | CB2 |
| 5 | CB1 | CB1 |
| 6 | CB2 | CB2 |
| 7 | CB3 | CB1 |
| 8 | CB4 | CB2 |
| ...... | ...... | ...... |

For instance, after calculation, CB1 and CB2 determines that the master device of PE1 is CB1. At this moment, CB2 has to send the receiver-uncertain packets to PE1 via the downlink cascaded port, i.e., Port7 upon determining CB2 is not the master CB device corresponding to PE1. In an example, CCB2 sends the second blocking entry to the Ethernet chip within the Port7. As shown in Table. 3, the direction of the ACL is egress, the matching rule is "Multicast, broadcast or unknown unicast", and the corresponding action is "drop."

**Table. 3**

| No. | Direction | Matching rule | Action |
|---|---|---|---|
| 1 | Egress | Multicast, broadcast or unknown unicast | Drop |
| ...... | ...... | ...... | ...... |

In other scenarios, the source device of the packet may also be the CB device. Referring to FIG. 1, Port15 of CB3 has been connected by hosts. The packets sent by the host may be the packet without definite destination, and thus may cause the loop issue. In another example, the forwarding control logic may also configure source-dropping entries on the CB device. The process will be described hereinafter.

At block 304, a shortest forwarding path between the CB device and other CB device is calculated, and a forwarding entry corresponding to the shortest forwarding path is added to a unicast forwarding table.

Referring to FIG. 3B, it is to be noted that, in an example, block 304 may be executed before block 303. In another example, block 303 and block 304 may be executed at the same time.

Specifically, at block 304, the shortest forwarding path is calculated between the CB devices to other CB devices along the horizontally cascaded port, and then the unicast packet may be sent via the selected shortest path. When there are a plurality of forwarding paths with equal distance, the shortest forwarding path may be selected among the forwarding paths in accordance with path selection methods. Generally, the path selection method executed on each of the CB devices are the same. In an example, if the ID of one CB device is the minimum one among all of the CB devices, the forwarding path begins from the horizontally cascaded port along the first direction. Otherwise, if the ID of one CB device is the maximum one among all of the CB devices, the forwarding path begins from the horizontally cascaded port along the second direction. Table. 4 shows an example of the unicast forwarding entry calculated by CB 1 of FIG. 1.

**Table. 4**

| Destination device | Egress |
|---|---|
| CB1 | - |
| CB2 | Port5 |
| CB3 | Port5 |
| CB4 | Port6 |

At block 305, the source-dropping entries are configured based on the unicast forwarding table. In an example, the source-dropping entries are configured in accordance with the following rules.

First, the packet sent from the source device toward the CB device is dropped.

Second, the packets sent from other source CB devices via the paths that are not the shortest path are dropped.

Also referring to FIG. 1, the source-dropping entries configured on CB1 are shown in Table. 5. The first and second entry indicate the packets sent from the source device "CB1" have to be dropped regardless of the horizontally cascaded port. The third entry indicates CB 1 may accept the packets the packets sent from CB2 via Port5, i.e., the shortest forwarding path between CB1 and CB2. The fourth entry indicates CB1 may drop the packets sent from CB2 via Port6, which is not forwarded via the shortest forwarding path. Such configuration may avoid the receiver-uncertain packets, such as the broadcast packet, from causing the loop issue within the ring topology. The fifth and the sixth entries are configured in the same way. Referring to the seventh and the eighth entries, it can be understand that CB1 may accept the packets sent from CB4 via Port6. As such, the packets sent from CB4 via Port 5 may be dropped. In an example of the packets sent from Host4, the source device of the packets is CB3. The packets may not be dropped by CB1 if the packets exit Port11 of CB3 and arrives at CB 1 via Port5 in accordance with the fifth entry. But the packets may be dropped by CB1 if the packets exit Port13 of CB3 and arrives at CB1 via Port6 in accordance with the sixth entry.

**Table. 5**

| No. | Source device | Ingress | Drop? |
|---|---|---|---|
| 1 | CB1 | Port5 | Y |
| 2 | CB1 | Port6 | Y |
| 3 | CB2 | Port5 | N |
| 4 | CB2 | Port6 | Y |
| 5 | CB3 | Port5 | N |
| 6 | CB3 | Port6 | Y |
| 7 | CB4 | Port5 | Y |
| 8 | CB4 | Port6 | N |

The foregoing descriptions are only examples of the present disclosure and are not for use in limiting the protection scope thereof. Any modification, equivalent replacement and improvement made under the principle of the present disclosure should be included in the protection scope thereof.

## Claims

1. A packet forwarding loop control method in a virtual network device comprising (i) a plurality of core backbone, CB, devices, wherein the CB devices are network devices which capable executing forwarding logic and are serially connected via cascaded ports in a ring topology wherein one of the CB devices is a master device to control the operations of the virtual network device; and (ii) a plurality of port extender, PE, devices which are configured to operate as remote interface boards for providing more ports, the method comprising:
determining, on a first CB device, a candidate CB set which comprises the plurality of CB devices corresponding to a PE device using a predetermined first selection rule; and
upon determining the first CB device belongs to the candidate CB set, configuring first blocking entries corresponding to the respective PE device on the first CB device, wherein the first blocking entries are for preventing the receiver-uncertain packets sent from the respective PE device being forwarded via designated cascaded ports connecting the CB devices.

2. A method in accordance with the method of claim 1, wherein the first blocking entry comprises:
an ingress blocking entry for blocking the receiver-uncertain packets sent from the respective PE from entering the CB device via the designated cascaded port; and
an egress blocking entry for blocking the receiver-uncertain packets sent from the respective PE from exiting the CB device via the designated cascaded port.

3. A method in accordance with the method of claim 2, wherein the first selection rule comprises:
inputting an identifier, ID, of the respective PE device to a predetermined algorithm to calculate a random number M;
S= M%N, wherein N represents a total number of the CB devices within the virtual system; and
determining the corresponding CB device in accordance with the value of S and adding the CB device to the candidate CB set.

4. A method in accordance with the method of claim 1, wherein the candidate CB set comprises a first candidate CB device and a second candidate CB device adjacent to the first candidate device, and the designated cascaded port of the first candidate device is the cascaded port along the first direction upon determining the CB device is the first candidate CB device, the designated cascaded port of the second candidate device is the cascaded port along the second direction upon determining the CB device is the second candidate CB device; and
the first blocking entry is an ingress blocking entry for blocking the receiver-uncertain packets sent from the PE device to enter the CB device via the designated cascaded port.

5. A method in accordance with the method of claim 1, wherein the first selection rule comprises:
inputting an identifier (ID) of the respective PE device to a predetermined algorithm to calculate a random number M;
S= M%N, wherein N represents a total number of the CB devices within the virtual system;
determining the corresponding CB device in accordance with the value of S and adding the CB device to the candidate CB set; and
determining the CB device arranged at opposite end of the designated cascaded port of the first candidate CB device to be the second candidate CB device and adding the second candidate CB device to the candidate CB set.

6. A method in accordance with the method of claim 1, wherein the first blocking entry is an access control list (ACL) entry comprising a matching rule and a corresponding action, the matching rule determines whether the source device of the receiver-uncertain packets is the PE device, and the corresponding action is dropping.

7. A method in accordance with the method of claim 1, the method further comprises a second predetermined selection rule to determine whether the first CB device is a master CB device corresponding to the respective PE device when the respective PE device connects to other CB devices; and
configuring a second blocking entry corresponding to the respective PE device for preventing a downlink cascaded port of the PE device from receiving the receiver-uncertain packets sent from the PE device.

8. A CB device for use in a virtual network device comprising (i) a plurality of core backbone, CB, devices, wherein the CB devices are network devices which capable executing forwarding logic and are serially connected in a ring topology via cascaded ports wherein one of the CB devices is a master device to control the operations of the virtual network device; and (ii) a plurality of port extender, PE, devices which are configured to operate as remote interface boards for providing more ports, comprising:
a processor and a non-volatile machine readable storage medium storing an instruction set executable by the processor to:
determine a candidate CB set corresponding to a port extender, PE, device using a predetermined first selection rule when a plurality of CB devices are connected via cascaded ports within the virtual network device to form the ring topology; and
configure first blocking entries corresponding to the respective PE device on the CB device upon determining the CB device belongs to the candidate CB set, wherein the first blocking entries are for preventing the receiver-uncertain packets sent from the respective PE device being forwarded via designated cascaded ports.

9. The CB device of claim of claim 8, wherein the first blocking entry comprises:
an ingress blocking entry for blocking the receiver-uncertain packets sent from the respective PE to enter the CB device via the designated cascaded port; and
an egress blocking entry for blocking the receiver-uncertain packets sent from the respective PE to exit the CB device via the designated cascaded port.

10. The CB device of claim of claim 9, wherein the first selection rule comprises:
inputting an identifier (ID) of the respective PE device to a predetermined algorithm to calculate a random number M;
S= M%N, wherein N represents a total number of the CB devices within the virtual system; and
determining the corresponding CB device in accordance with the value of S and adding the CB device to the candidate CB set.

11. The CB device of claim of claim 8, wherein the candidate CB set comprises a first candidate CB device and a second candidate CB device adjacent to the first candidate device, the designated cascaded port of the first candidate device is the cascaded port along the first direction upon determining the CB device is the first candidate CB device, the designated cascaded port of the second candidate device is the cascaded port along the second direction upon determining the CB device is the second candidate CB device; and
the first blocking entry is an ingress blocking entry for blocking the receiver-uncertain packets sent from the PE device to enter the CB device via the designated cascaded port.

12. The CB device of claim of claim 8, wherein the first selection rule comprises:
inputting an identifier (ID) of the respective PE device to a predetermined algorithm to calculate a random number M;
S= M%N, wherein N represents a total number of the CB devices within the virtual system;
determining the corresponding CB device in accordance with the value of S and adding the CB device to the candidate CB set; and
determining the CB device arranged at opposite end of the designated cascaded port of the first candidate CB device to be the second candidate CB device and adding the second candidate CB device to the candidate CB set.

13. The CB device of claim of claim 8, wherein the first blocking entry is an access control list (ACL) entry comprising a matching rule and a corresponding action, the matching rule determines whether the source device of the receiver-uncertain packets is the PE device, and the corresponding action is dropping.

14. The CB device of claim of claim 8, wherein the instruction set further comprises a second predetermined selection rule to:
determine whether the CB device is a master CB device corresponding to the respective PE device when the respective PE device connects to other CB devices; and
configure a second blocking entry corresponding to the respective PE device for preventing a downlink cascaded port of the PE device from receiving the receiver-uncertain packets sent from the PE device.

## Patentansprüche

1. Paketweiterleitungsschleifensteuerverfahren in einer virtuellen Netzwerkvorrichtung, umfassend (i) mehrere Core-Backbone-Vorrichtungen (CB-Vorrichtungen), wobei die CB-Vorrichtungen Netzwerkvorrichtungen sind, die in der Lage sind, Weiterleitungslogik auszuführen, und über kaskadierte Anschlüsse in einer Ringtopologie in Reihe geschaltet sind, wobei eine der CB-Vorrichtungen eine Master-Vorrichtung zum Steuern der Vorgänge der virtuellen Netzwerkvorrichtung ist; und (ii) mehrere Port-Extender-Vorrichtungen (PE-Vorrichtungen), die konfiguriert sind, um als Fernschnittstellenplatinen zum Bereitstellen mehrerer Anschlüsse betrieben zu werden, wobei das Verfahren Folgendes umfasst:
Bestimmen, auf einer ersten CB-Vorrichtung, eines Kandidaten-CB-Satzes, welcher die mehreren CB-Vorrichtungen umfasst, die einer PE-Vorrichtung entsprechen, unter Verwendung einer vorbestimmten ersten Auswahlregel; und
beim Bestimmen, dass die erste CB-Vorrichtung zu dem Kandidaten-CB-Satz gehört, Konfigurieren erster Blockiereinträge, die der jeweiligen PE-Vorrichtung entsprechen, auf der ersten CB-Vorrichtung, wobei die ersten Blockiereinträge dem Verhindern dienen, dass die Pakete mit ungewissem Empfänger, die von der jeweiligen PE-Vorrichtung gesendet werden, über festgelegte kaskadierte Anschlüsse weitergeleitet werden, welche die CB-Vorrichtungen verbinden.

2. Verfahren gemäß dem Verfahren nach Anspruch 1, wobei der erste Blockiereintrag Folgendes umfasst:
einen Eintrittsblockiereintrag zum Blockieren des Eintritts der Pakete mit ungewissem Empfänger, die von dem jeweiligen PE gesendet werden, in die CB-Vorrichtung über den festgelegten kaskadierten Anschluss; und
einen Austrittsblockiereintrag zum Blockieren des Austritts der Pakete mit ungewissem Empfänger, die von dem jeweiligen PE gesendet werden, aus der CB-Vorrichtung über den festgelegten kaskadierten Anschluss.

3. Verfahren gemäß dem Verfahren nach Anspruch 2, wobei die erste Auswahlregel Folgendes umfasst:
Eingeben einer Kennung (ID) der jeweiligen PE-Vorrichtung in einen vorbestimmten Algorithmus, um eine Zufallszahl M zu berechnen;
S= M%N, wobei N eine Gesamtanzahl der CB-Vorrichtungen innerhalb des virtuellen Systems darstellt; und
Bestimmen der entsprechenden CB-Vorrichtung gemäß dem Wert von S und Hinzufügen der CB-Vorrichtung zu dem Kandidaten-CB-Satz.

4. Verfahren gemäß dem Verfahren nach Anspruch 1, wobei der Kandidaten-CB-Satz eine erste Kandidaten-CB-Vorrichtung und eine zweite Kandidaten-CB-Vorrichtung neben der ersten Kandidatenvorrichtung umfasst und der festgelegte kaskadierte Anschluss der ersten Kandidatenvorrichtung der kaskadierte Anschluss entlang der ersten Richtung ist, beim Bestimmen, dass die CB-Vorrichtung die erste Kandidaten-CB-Vorrichtung ist, der festgelegte kaskadierte Anschluss der zweiten Kandidatenvorrichtung der kaskadierte Anschluss entlang der zweiten Richtung ist, beim Bestimmen, dass die CB-Vorrichtung die zweite Kandidaten-CB-Vorrichtung ist; und
der erste Blockiereintrag ein Eintrittsblockiereintrag zum Blockieren des Eintritts der Pakete mit ungewissem Empfänger, die von der PE-Vorrichtung gesendet werden, in die CB-Vorrichtung über den festgelegten kaskadierten Anschluss ist.

5. Verfahren gemäß dem Verfahren nach Anspruch 1, wobei die erste Auswahlregel Folgendes umfasst:
Eingeben einer Kennung (ID) der jeweiligen PE-Vorrichtung in einen vorbestimmten Algorithmus, um eine Zufallszahl M zu berechnen;
S= M%N, wobei N eine Gesamtanzahl der CB-Vorrichtungen innerhalb des virtuellen Systems darstellt;
Bestimmen der entsprechenden CB-Vorrichtung gemäß dem Wert von S und Hinzufügen der CB-Vorrichtung zu dem Kandidaten-CB-Satz; und Bestimmen der CB-Vorrichtung, die am entgegengesetzten Ende des festgelegten kaskadierten Anschlusses der ersten Kandidaten-CB-Vorrichtung angeordnet ist, als die zweite Kandidaten-CB-Vorrichtung und Hinzufügen der zweiten Kandidaten-CB-Vorrichtung zu dem Kandidaten-CB-Satz.

6. Verfahren gemäß dem Verfahren nach Anspruch 1, wobei der erste Blockiereintrag ein Zugriffskontrolllisteneintrag (ACL-Eintrag) ist, der eine Abgleichsregel und eine
entsprechende Handlung umfasst, wobei die Abgleichsregel bestimmt, ob die Quellvorrichtung der Pakete mit ungewissem Empfänger die PE-Vorrichtung ist, und die entsprechende Handlung Abwerfen ist.

7. Verfahren gemäß dem Verfahren nach Anspruch 1, wobei das Verfahren ferner eine zweite vorbestimmte Auswahlregel umfasst, um zu bestimmen, ob die erste CB-Vorrichtung eine Master-CB-Vorrichtung entsprechend der jeweiligen PE-Vorrichtung ist, wenn sich die jeweilige PE-Vorrichtung mit anderen CB-Vorrichtungen verbindet; und
Konfigurieren eines zweiten Blockiereintrags, welcher der jeweiligen PE-Vorrichtung entspricht, zum Verhindern, dass ein kaskadierter-Downlink-Anschluss der PE-Vorrichtung die Pakete mit ungewissem Empfänger, die von der PE-Vorrichtung gesendet werden, empfängt.

8. CB-Vorrichtung zur Verwendung in einer virtuellen Netzwerkvorrichtung, umfassend (i) mehrere Core-Backbone-Vorrichtungen (CB-Vorrichtungen), wobei die CB-Vorrichtungen Netzwerkvorrichtungen sind, die in der Lage sind, Weiterleitungslogik auszuführen, und in einer Ringtopologie über kaskadierte Anschlüsse in Reihe geschaltet sind, wobei eine der CB-Vorrichtungen eine Master-Vorrichtung zum Steuern der Vorgänge der virtuellen Netzwerkvorrichtung ist; und (ii) mehrere Port-Extender-Vorrichtungen (PE-Vorrichtungen), die
konfiguriert sind, um als Fernschnittstellenplatinen zum Bereitstellen mehrerer Anschlüsse betrieben zu werden, umfassend: einen Prozessor und ein nicht flüchtiges maschinenlesbares Speichermedium zum Speichern eines Anweisungssatzes, der durch den Prozessor ausgeführt werden kann, zum:
Bestimmen eines Kandidaten-CB-Satzes, der einer Port-Extender-Vorrichtung (PE-Vorrichtung) entspricht, unter Verwendung einer vorbestimmten ersten Auswahlregel, wenn mehrere CB-Vorrichtungen über kaskadierte Anschlüsse innerhalb der virtuellen Netzwerkvorrichtung verbunden sind, um die Ringtopologie auszubilden; und
Konfigurieren erster Blockiereinträge, die der jeweiligen PE-Vorrichtung entsprechen, auf der CB-Vorrichtung beim Bestimmen, dass die CB-Vorrichtung zu dem Kandidaten-CB-Satz gehört, wobei die ersten Blockiereinträge dem Verhindern dienen, dass die Pakete mit ungewissem Empfänger, die von der jeweiligen PE-Vorrichtung gesendet werden, über festgelegte kaskadierte Anschlüsse weitergeleitet werden.

9. CB-Vorrichtung nach Anspruch 8, wobei der erste Blockiereintrag Folgendes umfasst:
einen Eintrittsblockiereintrag zum Blockieren des Eintritts der Pakete mit ungewissem Empfänger, die von dem jeweiligen PE gesendet werden, in die CB-Vorrichtung über den festgelegten kaskadierten Anschluss; und
einen Austrittsblockiereintrag zum Blockieren des Austritts der Pakete mit ungewissem Empfänger, die von dem jeweiligen PE gesendet werden, aus der CB-Vorrichtung über den festgelegten kaskadierten Anschluss.

10. CB-Vorrichtung nach Anspruch 9, wobei die erste Auswahlregel Folgendes umfasst: Eingeben einer Kennung (ID) der jeweiligen PE-Vorrichtung in einen vorbestimmten Algorithmus, um eine Zufallszahl M zu berechnen;
S= M%N, wobei N eine Gesamtanzahl der CB-Vorrichtungen innerhalb des virtuellen Systems darstellt; und
Bestimmen der entsprechenden CB-Vorrichtung gemäß dem Wert von S und Hinzufügen der CB-Vorrichtung zu dem Kandidaten-CB-Satz.

11. CB-Vorrichtung nach Anspruch 8, wobei der Kandidaten-CB-Satz eine erste Kandidaten-CB-Vorrichtung und eine zweite Kandidaten-CB-Vorrichtung neben der ersten Kandidatenvorrichtung umfasst, der festgelegte kaskadierte Anschluss der ersten Kandidatenvorrichtung der kaskadierte Anschluss entlang der ersten Richtung ist, beim Bestimmen, dass die CB-Vorrichtung die erste Kandidaten-CB-Vorrichtung ist, der festgelegte kaskadierte Anschluss der zweiten Kandidatenvorrichtung der kaskadierte Anschluss entlang der zweiten Richtung ist, beim Bestimmen, dass die CB-Vorrichtung die zweite Kandidaten-CB-Vorrichtung ist; und
der erste Blockiereintrag ein Eintrittsblockiereintrag zum Blockieren des Eintritts der Pakete mit ungewissem Empfänger, die von der PE-Vorrichtung gesendet werden, in die CB-Vorrichtung über den festgelegten kaskadierten Anschluss ist.

12. CB-Vorrichtung nach Anspruch 8, wobei die erste Auswahlregel Folgendes umfasst:
Eingeben einer Kennung (ID) der jeweiligen PE-Vorrichtung in einen vorbestimmten Algorithmus, um eine Zufallszahl M zu berechnen;
S= M%N, wobei N eine Gesamtanzahl der CB-Vorrichtungen innerhalb des virtuellen Systems darstellt;
Bestimmen der entsprechenden CB-Vorrichtung gemäß dem Wert von S und Hinzufügen der CB-Vorrichtung zu dem Kandidaten-CB-Satz; und
Bestimmen der CB-Vorrichtung, die am entgegengesetzten Ende des festgelegten kaskadierten Anschlusses der ersten Kandidaten-CB-Vorrichtung angeordnet ist, als die zweite Kandidaten-CB-Vorrichtung und Hinzufügen der zweiten Kandidaten-CB-Vorrichtung zu dem Kandidaten-CB-Satz.

13. CB-Vorrichtung nach Anspruch 8, wobei der erste Blockiereintrag ein Zugriffskontrolllisteneintrag (ACL-Eintrag) ist, der eine Abgleichsregel und eine entsprechende Handlung umfasst, wobei die Abgleichsregel bestimmt, ob die Quellvorrichtung der Pakete mit ungewissem Empfänger die PE-Vorrichtung ist, und die entsprechende Handlung Abwerfen ist.

14. CB-Vorrichtung nach Anspruch 8, wobei der Anweisungssatz ferner eine zweite vorbestimmte Auswahlregel umfasst zum:
Bestimmen, ob die CB-Vorrichtung eine Master-CB-Vorrichtung entsprechend der jeweiligen PE-Vorrichtung ist, wenn sich die jeweilige PE-Vorrichtung mit anderen CB-Vorrichtungen verbindet; und
Konfigurieren eines zweiten Blockiereintrags, welcher der jeweiligen PE-Vorrichtung entspricht, zum Verhindern, dass ein kaskadierter-Downlink-Anschluss der PE-Vorrichtung die Pakete mit ungewissem Empfänger, die von der PE-Vorrichtung gesendet werden, empfängt.

## Revendications

1. Procédé de commande de boucle de transmission de paquets dans un dispositif de réseau virtuel comprenant (i) une pluralité de dispositifs de réseau central fédérateur, CB, les dispositifs CB étant des dispositifs de réseau pouvant exécuter une logique de transmission et étant connectés en série via des ports en cascade dans une topologie en anneau dans lequel l'un des dispositifs CB est un dispositif maître pour commander les opérations du dispositif de réseau virtuel ; et (ii) une pluralité de dispositifs d'extension de port, PE, qui sont configurés pour fonctionner en tant que cartes d'interface distantes pour fournir plus de ports, le procédé comprenant :
la détermination, sur un premier dispositif CB, d'un ensemble CB candidat qui comprend la pluralité de dispositifs CB correspondant à un dispositif PE, à l'aide d'une première règle de sélection prédéterminée ; et
s'il est déterminé que le premier dispositif CB appartient à l'ensemble CB candidat, la configuration de premières entrées de blocage correspondant au dispositif PE respectif sur le premier dispositif CB, les premières entrées de blocage étant destinées à empêcher la transmission, via des ports en cascade désignés connectant les dispositifs CB, des paquets avec incertitude du récepteur envoyés depuis le dispositif PE respectif.

2. Procédé selon le procédé de la revendication 1, dans lequel la première entrée de blocage comprend :
une entrée de blocage d'admission destinée à empêcher les paquets avec incertitude du récepteur envoyés depuis le PE respectif d'entrer dans le dispositif CB via le port en cascade désigné ; et
une entrée de blocage de sortie pour empêcher les paquets avec incertitude du récepteur envoyés depuis le PE respectif de quitter le dispositif CB via le port en cascade désigné.

3. Procédé selon le procédé de la revendication 2, dans lequel la première règle de sélection comprend :
la saisie d'un identifiant (ID) du dispositif PE respectif dans un algorithme prédéterminé pour calculer un nombre aléatoire M ;
S= M%N, où N représente un nombre total de dispositifs CB dans le système virtuel ; et
la détermination du dispositif CB correspondant en fonction de la valeur de S et l'ajout du dispositif CB à l'ensemble CB candidat.

4. Procédé selon le procédé de la revendication 1, dans lequel l'ensemble CB candidat comprend un premier dispositif CB candidat et un second dispositif CB candidat adjacent au premier dispositif candidat, et le port en cascade désigné du premier dispositif candidat est le port en cascade dans la première direction s'il est déterminé que le dispositif CB est le premier dispositif CB candidat, le port en cascade désigné du second dispositif candidat est le port en cascade dans la seconde direction s'il est déterminé que le dispositif CB est le second dispositif CB candidat ; et
la première entrée de blocage est une entrée de blocage d'admission destinée à empêcher les paquets avec incertitude du récepteur envoyés depuis le dispositif PE d'entrer dans le dispositif CB via le port en cascade désigné.

5. Procédé selon le procédé de la revendication 1, dans lequel la première règle de sélection comprend :
la saisie d'un identifiant (ID) du dispositif PE respectif dans un algorithme prédéterminé pour calculer un nombre aléatoire M ;
S= M%N, où N représente un nombre total de dispositifs CB dans le système virtuel ;
la détermination du dispositif CB correspondant conformément à la valeur de S et l'ajout du dispositif CB à l'ensemble CB candidat ; et
la détermination du dispositif CB agencé à l'extrémité opposée du port en cascade désigné du premier dispositif CB candidat comme étant le second dispositif CB candidat et l'ajout du second dispositif CB candidat à l'ensemble CB candidat.

6. Procédé selon le procédé de la revendication 1, dans lequel la première entrée de blocage est une entrée de liste de contrôle d'accès (ACL) comprenant une règle de correspondance et une action correspondante, la règle de correspondance détermine si le dispositif source des paquets avec incertitude du récepteur est le dispositif PE, et l'action correspondante est l'abandon.

7. Procédé selon le procédé de la revendication 1, le procédé comprenant en outre une seconde règle de sélection prédéterminée pour déterminer si le premier dispositif CB est un dispositif CB maître correspondant au dispositif PE respectif lorsque le dispositif PE respectif se connecte à d'autres dispositifs CB ; et
la configuration d'une seconde entrée de blocage correspondant au dispositif PE respectif pour empêcher un port en cascade de liaison descendante du dispositif PE de recevoir les paquets avec incertitude du récepteur envoyés depuis le dispositif PE.

8. Dispositif CB destiné à être utilisé dans un dispositif de réseau virtuel comprenant (i) une pluralité de dispositifs de réseau central fédérateur, CB, les dispositifs CB étant des dispositifs de réseau pouvant exécuter une logique de transmission et étant connectés en série dans une topologie en anneau via des ports en cascade dans lequel l'un des dispositifs CB est un dispositif maître pour commander les opérations du dispositif de réseau virtuel ; et (ii) une pluralité de dispositifs d'extension de port (PE), qui sont configurés pour fonctionner en tant que cartes d'interface distantes pour fournir plus de ports, comprenant :
un processeur et un support de stockage non volatile lisible par machine, stockant un ensemble d'instructions exécutables par le processeur pour :
déterminer un ensemble CB candidat correspondant à un dispositif d'extension de port, PE, à l'aide d'une première règle de sélection prédéterminée lorsqu'une pluralité de dispositifs CB sont connectés via des ports en cascade dans le dispositif de réseau virtuel pour former la topologie en anneau ; et
configurer des premières entrées de blocage correspondant au dispositif PE respectif sur le dispositif CB s'il est déterminé que le dispositif CB appartient à l'ensemble CB candidat, les premières entrées de blocage étant destinées à empêcher la transmission des paquets avec incertitude du récepteur envoyés depuis le dispositif PE respectif via des ports en cascade désignés.

9. Dispositif CB selon la revendication 8, dans lequel la première entrée de blocage comprend :
une entrée de blocage d'admission destinée à empêcher les paquets avec incertitude du récepteur envoyés depuis le PE respectif d'entrer dans le dispositif CB via le port en cascade désigné ; et
une entrée de blocage de sortie destinée à empêcher les paquets avec incertitude du récepteur envoyés depuis le PE respectif de sortir du dispositif CB via le port en cascade désigné.

10. Dispositif CB selon la revendication 9, dans lequel la première règle de sélection comprend :
la saisie d'un identifiant (ID) du dispositif PE respectif dans un algorithme prédéterminé pour calculer un nombre aléatoire M ;
S= M%N, où N représente un nombre total de dispositifs CB dans le système virtuel ; et
la détermination du dispositif CB correspondant en fonction de la valeur de S et l'ajout du dispositif CB à l'ensemble CB candidat.

11. Dispositif CB selon la revendication 8, dans lequel l'ensemble CB candidat comprend un premier dispositif CB candidat et un second dispositif CB candidat adjacent au premier dispositif candidat, le port en cascade désigné du premier dispositif candidat étant le port en cascade dans la première direction s'il est déterminé que le dispositif CB est le premier dispositif CB candidat, le port en cascade désigné du second dispositif candidat est le port en cascade dans la seconde direction s'il est déterminé que le dispositif CB est le second dispositif CB candidat ; et
la première entrée de blocage est une entrée de blocage d'admission destinée à empêcher les paquets avec incertitude du récepteur envoyés depuis le dispositif PE d'entrer dans le dispositif CB via le port en cascade désigné.

12. Dispositif CB selon la revendication 8, dans lequel la première règle de sélection comprend :
la saisie d'un identifiant (ID) du dispositif PE respectif dans un algorithme prédéterminé pour calculer un nombre aléatoire M ;
S= M%N, où N représente un nombre total de dispositifs CB dans le système virtuel ;
la détermination du dispositif CB correspondant conformément à la valeur de S et l'ajout du dispositif CB à l'ensemble CB candidat ; et
la détermination du dispositif CB agencé à l'extrémité opposée du port en cascade désigné du premier dispositif CB candidat comme étant le second dispositif CB candidat et l'ajout du second dispositif CB candidat à l'ensemble CB candidat.

13. Dispositif CB selon la revendication 8, dans lequel la première entrée de blocage est une entrée de liste de contrôle d'accès (ACL) comprenant une règle de correspondance et une action correspondante, la règle de correspondance détermine si le dispositif source des paquets avec incertitude du récepteur est le dispositif PE, et l'action correspondante est l'abandon.

14. Dispositif CB selon la revendication 8, dans lequel l'ensemble d'instructions comprend en outre une seconde règle de sélection prédéterminée pour :
déterminer si le dispositif CB est un dispositif CB maître correspondant au dispositif PE respectif lorsque le dispositif PE respectif se connecte à d'autres dispositifs CB ; et
configurer une seconde entrée de blocage correspondant au dispositif PE respectif pour empêcher un port en cascade de liaison descendante du dispositif PE de recevoir les paquets avec incertitude du récepteur envoyés depuis le dispositif PE.
